# EUROPÄISCHE PATENTANMELDUNG

(11) **EP 4 439 021 A1**
(43) Veröffentlichungstag der Anmeldung: **02.10.2024**
(21) Anmeldenummer: 24165718.8
(22) Anmeldetag: 22.03.2024
(51) Int. Cl.: G01F 23/296

(54) **VIBRATIONSSENSOR**

(30) Priorität: 27.03.2023 DE 102023107707
(71) Anmelder: VEGA Grieshaber KG, 77709 Wolfach (DE)
(72) Erfinder: Gruhler, Holger, 78609 Tuningen (DE); Epting, Julian, 78132 Hornberg (DE); Schätzle, Benjamin, 77978 Schuttertal (DE)
(74) Vertreter: Patentanwälte Bauer Vorberg Kayser

(57) **Zusammenfassung**

Vibrationssensor, zur Detektion von Füllständen, Grenzständen oder zur Überwachung von Prozessparametern, umfassend:
- eine in Schwingung versetzbare Membran (12),
- eine Antriebseinheit (14), wobei die Antriebseinheit (14) einen Piezoaktor (16) umfasst, der ein Piezoelement (18), und eine mit dem Piezoelement (18) verbundenen Elektrode (20) mit einer Elektrodenfläche (21) aufweist,
- eine Klebeverbindung (26), mit deren Hilfe der Piezoaktor (16) so mit der Membran (12) wirkverbunden ist, dass Schwingungen des Piezoaktors (16) auf die Membran (12) übertragbar sind,
- eine Elektronik (22),
- eine elektrische Verbindung (24) zwischen der Elektronik (22) und der Elektrodenfläche (21),
wobei das Piezoelement (18) eine Aussparung (32) aufweist und die elektrische Verbindung (24) durch die Aussparung (32) verläuft.

## Beschreibung

Die Erfindung betrifft einen Vibrationssensor gemäß Patentanspruch 1.

Nach dem Stand der Technik sind Vibrationssensoren, die beispielsweise als Vibrationsgrenzschalter verwendet werden, bekannt, wobei der Vibrationssensor eine über eine Antriebseinheit zu einer Schwingung anregbaren Membran aufweist, mittels der oft ein an der Membran angeordneter mechanischer Schwinger, beispielsweise eine Schwinggabel, zu einer Schwingung anregbar ist. Abhängig von einem Bedeckungsstand des mechanischen Schwingers mit einem Füllgut sowie abhängig von der Viskosität dieses Füllgutes kann dieser mit einer charakteristischen Frequenz schwingen, die von dem Vibrationssensor detektiert werden und in ein Messsignal umgewandelt werden kann. Derartige Vibrationssensoren können auch als vibronische Sensoren bezeichnet werden. Als elektromechanische Wandler der Antriebseinheit eines solchen Sensors kommen oft Piezoaktoren mit einem Piezoelement, z. B. einer Piezokeramik, zum Einsatz. Ein bekanntes Konzept besteht dabei darin, den Piezoaktor mittels einer Klebeverbindung zu fixieren. Dieses Konzept findet immer häufiger Verwendung, da so eine verbesserte Performance, geringere Herstellkosten und eine höhere Automatisierbarkeit als beispielsweise bei einem verschraubten Piezoaktor zu erreichen sind.

Hierzu kann auf die Membran eine Klebeschicht aufgebracht, ein Ausgleichselement, z. B. eine Ausgleichskeramik, mit der Membran verklebt, auf die Ausgleichskeramik wiederum eine Klebeschicht aufgebracht und mit dieser eine Klebeverbindung zu dem Piezoaktor hergestellt werden. Der Piezoaktor kann anschließend, z. B. über eine flexible Leiterplatte, kontaktiert werden. Die flexible Leiterplatte kann ein sogenannter Flexleiter sein.

Nachteilig hierbei kann es sein, dass der Piezoaktor hinsichtlich seiner Position und Rotationslage vor dem Verkleben sehr exakt ausgerichtet sein und oft bis zur Aushärtung des Klebstoffs fixiert werden muss. Zudem ist diese Ausrichtung oft schwierig. Nachteilig kann zudem sein, dass die Leistungsfähigkeit des Piezoaktors nicht so hoch ist, wie es wünschenswert wäre.

Es ist daher die Aufgabe der Erfindung, einen weitergebildeten Vibrationssensor bereitzustellen.

Die Lösung der Aufgabe erfolgt erfindungsgemäß mit den Merkmalen des Patentanspruch 1. Weitere praktische Ausführungsformen und Vorteile sind in Verbindung mit den abhängigen Ansprüchen beschrieben.

Ein erfindungsgemäßer Vibrationssensor dient zur Detektion von Füllständen, Grenzständen oder zur Überwachung von Prozessparametern und umfasst eine in Schwingung versetzbare Membran. Zudem umfasst ein erfindungsgemäßer Vibrationssensor eine Antriebseinheit, wobei die Antriebseinheit einen Piezoaktor umfasst. Der Piezoaktor weist ein Piezoelement und eine mit dem Piezoelement verbundenen Elektrode auf. Die Elektrode weist eine Elektrodenfläche auf. Zudem umfasst ein erfindungsgemäßer Vibrationssensor eine Klebeverbindung, mit deren Hilfe der Piezoaktor so mit der Membran wirkverbunden ist, dass Schwingungen des Piezoaktors auf die Membran übertragbar sind und bevorzugt auch Schwingungen der Membran auf den Piezoaktor übertragbar sind. Bevorzugt dient der Piezoaktor sowohl dazu, die Membran in Schwingung zu versetzen als auch dazu, die Schwingung der Membran zu detektieren. Die Antriebseinheit ist insbesondere also ein geklebter Piezoantrieb bzw. geklebter Piezoaktor. Zudem umfasst ein erfindungsgemäßer Vibrationssensor eine Elektronik und eine elektrische Verbindung zwischen der Elektronik und der Elektrodenfläche. Das Piezoelement weist eine Aussparung auf und die elektrische Verbindung verläuft durch die Aussparung.

Auf diese Weise ist eine Voraussetzung dafür geschaffen, dass die elektrische Verbindung die aktive Fläche des Piezoelements allenfalls in einer Weise beeinträchtigt, die keine oder nur geringere Störmoden hervorruft. Insbesondere ist durch diesen Aufbau die Antriebseinheit nicht so anfällig auf Störmoden bzw. gibt hierbei kein so großes Fehlsignal aus. Der Piezoantrieb kann hierdurch besonders einfach symmetrisch, z .B. rotationssymmetrisch, aufgebaut sein. Mit rotationssymmetrisch ist im Rahmen dieser Druckschrift gemeint, dass eine Drehung um beliebige Winkel um die Rotationsachse zu einer Abbildung auf sich selbst führt. Zudem kann die präzise Montage des Piezoaktors in dem Sensor vereinfacht sein. Durch Unsymmetrien im Aufbau des Piezoaktors oder durch eine nicht-präzise, z. B. unsymmetrische bzw. dezentrale bzw. verdrehte Montage des Piezoaktors im Sensor - etwa durch Positionstoleranzen des geklebten Piezoaktors - begünstigte Störmoden, können vermindert werden. Auch kann das Erfassen und Anregen von Störschwingungen durch die Elektronik im Empfangsbetrieb des Piezoaktors durch Fremdvibrationen vermindert werden. Es hat sich gezeigt, dass Fremdvibrationen bei einer präzisen Positionierung eines aus dem Stand der Technik bekannten Piezoaktors in einem aus dem Stand der Technik bekannten Vibrationssensor, etwa einer perfekt zentrischen Aufklebung des Piezoaktors, nur geringe Auswirkungen auf dessen Funktion haben und kritische Störsignale, die z. B. bei dezentraler Klebung entstehen können, weitgehend vermieden werden können. Bei einem erfindungsgemäßen Vibrationssensor kann dies einfacher erreicht werden. Ein erfinderischer Vibrationssensor kann unempfindlicher gegen Positionstoleranzen des Piezoaktors sein. Der Effekt, dass eine unsymmetrische oder versetzte Positionierung des Piezoaktors aufgrund der Geometrie des Piezoaktors und dem hierzu passenden Schwinggabelaufbau bei Fremdanregung durch Störmoden fehlerhafte Signale begünstigt bzw. verstärkt, kann reduziert oder verhindert werden.

Zudem ist eine Voraussetzung dafür geschaffen, dass die elektrische Verbindung die aktive Fläche des Piezoelements nur besonders geringfügig beeinträchtigt. Hierdurch kann die Leistungsfähigkeit des Piezoaktors verbessert sein. Der Aufwand, den Piezoaktor hinsichtlich seiner Position und/oder Rotationslage beispielsweise relativ zu einer Schwinggabel des Vibrationssensors auszurichten, kann reduziert sein.

Der Vibrationssensor wird nachfolgend auch kurz als Sensor bezeichnet. Mit dem Begriff "Piezoelement" wird im Rahmen dieser Druckschrift der aus dem piezoelektrischen Material gebildete Teil des Piezoaktors, z. B. eine Piezoscheibe, bezeichnet. Das Piezoelement kann z. B. ein Piezokristall oder eine piezoelektrische Keramik sein.

Bevorzugt weist das Piezoelement eine erste, der Membran zugewandte Seite auf. Mit dem Begriff "Elektrodenfläche" wird im Rahmen dieser Druckschrift insbesondere der Teil der Elektrode bezeichnet, der - vorzugsweise ausschließlich - auf dieser ersten Seite des Piezoelements angeordnet ist. Die Elektrodenfläche ist bevorzugt kreisringförmig. Vorzugsweise weist das Piezoelement eine zweite, der Membran abgewandte Seite auf. Vorzugsweise reicht die Aussparung durch das Piezoelement hindurch, insbesondere von der ersten Seite bis zur zweiten Seite. Die Aussparung kann die Form einer Bohrung haben und die Wand der Aussparung kann hohlzylinderförmig sein.

Die Elektrodenfläche ist in dem Sensor bevorzugt zwischen dem Piezoelement und einem weiteren Bauteil, z. B. einem Ausgleichselement oder der Membran angeordnet, insbesondere also nicht frei zugänglich. Bevorzugt ist die Elektrodenfläche durch die Klebeverbindung abgedeckt, insbesondere vollständig.

Die Klebeverbindung, mit deren Hilfe der Piezoaktor so mit der Membran wirkverbunden ist, dass Schwingungen des Piezoaktors auf die Membran übertragbar sind, kann auch als Montageklebeverbindung bezeichnet werden. Der Piezoaktor kann mithilfe der Montageklebeverbindung in dem Sensor montiert sein.

Mittels der elektrischen Verbindung kann eine Kontaktierung der Elektrode, insbesondere der Elektrodenfläche, erfolgen. Bevorzugt ist die Elektrodenfläche von der der Membran abgewandten Seite des Piezoelements, üblicherweise also von oben, durch die Aussparung kontaktierbar. Die Kontaktierung erfolgt insbesondere um das Piezoelement oder um eine insbesondere durch die Aussparung gebildete Kante des Piezoelements herum und kann daher auch als Umkontaktierung bezeichnet werden.

Ein Bereich des Piezoaktors dient bevorzugt dazu, die Membran in Schwingung zu versetzten. Bevorzugt weist der Piezoaktor keine getrennten Bereiche für die Anregung und die Detektion der Schwingung der Membran auf. In der bevorzugten Ausführungsvariante wird ein gemeinsamer Bereich des Piezoaktors sowohl dazu genutzt, die Membran in Schwingung zu versetzten, als auch dazu, die Frequenz und/oder Amplitude, mit der die Membran schwingt, zu ermitteln. Vorzugsweise wird ein gemeinsamer Bereich des Piezoaktors - z. B. abwechselnd - als Sender und Empfänger genutzt. Bevorzugt ist die Elektrode von der Membran galvanisch getrennt.

Bei der Elektronik handelt es sich insbesondere um elektronische Bauteile, mittels welcher der Piezoaktor mit Antriebsenergie versorgt wird und/oder mittels welcher die von der dem Piezoaktor detektierten Signale ausgewertet werden. Die Elektronik kann eine Auswerteelektronik sein. Die Elektronik ist insbesondere zur Energieversorgung mit einer Stromquelle verbunden. Die Elektronik kann in einem Gehäuse angeordnet sein, welches zur Isolierung und Abschirmung der Elektronik dient.

Mit dem Begriff "elektrische Verbindung zwischen der Elektronik und der Elektrodenfläche" ist im Rahmen dieser Druckschrift insbesondere die Gesamtheit aller die Elektrodenfläche mit der Elektronik elektrisch verbindenden Elemente bezeichnet. Die elektrische Verbindung verläuft bevorzugt teilweise in und teilweise außerhalb der Aussparung. Die elektrische Verbindung kann eine elektrische Leitung, z. B. ein Kabel und/oder eine flexible Leiterplatte umfassen. Die elektrische Verbindung kann ein Kontaktelement zur Herstellung eines elektrischen Kontakts zu der Elektrode bzw. Elektrodenfläche, insbesondere zur Verbindung der elektrischen Leitung oder einer Leiterplatte mit der Elektrode bzw. Elektrodenfläche, z. B. eine Lötfahne oder einen Steckkontakt, umfassen. Der Steckkontakt kann crimpbar sein. Die elektrische Verbindung kann eine Löt-, Klebe- und/oder Schweißverbindung, insbesondere zwischen einerseits der elektrischen Leitung und/oder einer Leiterplatte und andererseits der Elektrode bzw. Elektrodenfläche bzw. dem Kontaktelement umfassen. Die Leiterplatte kann aus festem Material gefertigt sein oder aus flexiblem. Die Leiterplatte kann auch als Platine bezeichnet werden.

Bevorzugt erstreckt sich das Piezoelement in einer Ebene. Bevorzugt weist das Piezoelement eine Grundfläche auf, die insbesondere in dieser Ebene liegt. Wenn die elektrische Verbindung in der Ebene des Piezoelements nicht über den Umriss des Piezoelements hinaussteht, dann kann der Sensor besonders kompakt aufgebaut sein. Wenn das Piezoelement die Form einer Kreisringscheibe hat, mit einem Kreisring als Oberseite und einem Kreisring als Unterseite, dann ist mit der Grundfläche die Fläche eines der Kreisringe gemeint.

Wenn die Klebeverbindung elektrisch leitend ist und bevorzugt die Elektrodenfläche bildet, dann kann sich ein besonders einfacher Aufbau ergeben.

Bevorzugt ist die Klebeverbindung nicht elektrisch leitend. Auf diese Weise kann sie eine besonders geringe Dicke aufweisen und Schwingungen besonders verlustarm übertragen.

Wenn die Aussparung durch das Zentrum des Piezoelements verläuft, dann ist eine weitere Voraussetzung dafür geschaffen, dass die elektrische Verbindung bzw. die Aussparung die aktive Fläche des Piezoelements in einer Weise beeinträchtigt, die keine Störmoden hervorrufen. Zudem ist dann eine Voraussetzung dafür geschaffen, dass eine Ausrichtung der Rotationslage des Piezoaktors vor dem Verkleben entfallen kann.

Das Piezoelement bzw. der Piezoaktor kann scheibenförmig sein. Bevorzugt ist das Piezoelement bzw. der Piezoaktor ringscheibenförmig, vorzugsweise mit einem kreisförmigen Umriss. Das Piezoelement bzw. der Piezoaktor kann rotationssymmetrisch sein. Die Aussparung kann im Bereich der Rotationsachse bzw. parallel zur Rotationsachse des Piezoaktors bzw. Piezoelements verlaufen.

Bevorzugt ist die Elektrode kein eigenständiges Bauteil, sondern eine metallisierte Oberfläche auf dem Piezoelement bzw. des Piezoelements.

Die Elektrode ist bevorzugt als flächig aufgebrachte Metallisierung des Piezoelements ausgebildet. Bevorzugt ist die Elektrodenfläche eben, erstreckt sich also ausschließlich in einer Ebene.

Bevorzugt weist die Aussparung des Piezoelements eine Wand auf, die weiter bevorzugt zur ersten Seite des Piezoelements geneigt ist, insbesondere um etwa 90 Grad.

Wenn das Piezoelement um eine Rotationsachse rotationssymmetrisch ist und die Elektrode punktsymmetrisch zu der Rotationsachse bzw. rotationssymmetrisch zu derselben Rotationsachse ist, dann ist eine Voraussetzung dafür geschaffen, dass eine Verdrehung des Piezoaktors bei der Montage keine negativen Auswirkungen hat. Daher können auch Ausrichtmittel, wie etwa eine Ausrichtkerbe in dem Piezoaktor, entfallen und eine größere aktive Fläche des Piezoaktors möglich werden.

Wenn der Piezoaktor als in dem Sensor verklebte Ringscheibe ausgebildet ist, insbesondere mit zentrischer Umkontaktierung, dann kann der Piezoaktor besonders unempfindlich gegen Toleranzen bei der Montage sein. Es hat sich gezeigt, dass dies nicht nur hinsichtlich der Rotationslage des Piezoaktors, sondern erstaunlicherweise insbesondere hinsichtlich der Position des Piezoaktors in dem Sensor gilt.

Die Elektrode kann zusätzlich zu der Elektrodenfläche einen Verbindungsabschnitt aufweisen. Der Verbindungsabschnitt ist bevorzugt zur Elektrodenfläche geneigt.

Er kann die Form eines im Bereich der Ränder der Aussparung in die Elektrodenfläche übergehenden Hohlzylinders aufweisen. Die Elektrode kann also die Form einer Kreisfläche mit Loch und an den Rändern des Lochs angrenzenden Hohlzylinders haben. Bevorzugt ist das Loch deckungsgleich mit der Aussparung und weiter bevorzugt um die Rotationsachse des Piezoelements bzw. des Piezoantriebs herum angeordnet. Der Verbindungsabschnitt kann in die Aussparung des Piezoelements reichen. Der Verbindungsabschnitt kann eine Metallisierung der Wand der Aussparung des Piezoelements umfassen oder hierdurch gebildet sein. Bevorzugt erstreckt sich die Elektrode bzw. die die Elektrode bildende Metallisierung des Piezoelements insbesondere nahtlos von der der Membran zugewandte Seite des Piezoelements bis auf die Wand der Aussparung.

Wenn die elektrische Verbindung den Verbindungsabschnitt der Elektrode umfasst, dann kann die Elektrodenfläche besonders gut kontaktierbar sein.

Die elektrische Verbindung kann eine Kontaktierung, insbesondere einer elektrischen Leitung mit der Elektrode bzw. dem Verbindungsabschnitt, umfassen. Die Kontaktierung kann einen leitfähigen Klebstoff umfassen. Die Kontaktierung kann gelötet sein.

Die Kontaktierbarkeit der Elektrodenfläche kann insbesondere in Ausführungsformen, in denen in der Aussparung des Piezoelements ein Positioniermittel angeordnet ist, vereinfacht sein, wenn der Verbindungsabschnitt einen auf der der Membran abgewandten Seite des Piezoelements verlaufenden Bereich aufweist. Die Elektrode erstreckt sich in dieser Ausführungsform also auf beide Seiten des Piezoelements. Bevorzugt ist die Größe der Fläche des auf der der Membran abgewandten Seite des Piezoelements verlaufenden Verbindungsabschnitts der Elektrode kleiner als 1/10 oder 1/20 der Größe der Elektrodenfläche. Die Größe der Elektrode auf der der Membran abgewandten Seite des Piezoelements entspricht bevorzugt also weniger als 1/10 oder 1/20 der Größe der Elektrode auf der der Membran zugewandten Seite des Piezoelements. Es hat sich gezeigt, dass hierdurch einerseits nur eine geringfügige Verkleinerung der aktiven Fläche des Piezoelements erfolgt, was der Leistungsfähigkeit des Piezoaktors zugutekommt und dies andererseits zur zuverlässigen Kontaktierung der Elektrode ausreicht.

Der auf der der Membran abgewandten Seite des Piezoelements verlaufenden Bereich des Verbindungsabschnitts kann ringförmig, insbesondere kreisringförmig sein. Dieser Bereich kann kragenförmig sein. Dieser Bereich kann um die Aussparung des Piezoelements herum angeordnet sein.

Wenn die elektrische Verbindung einen leitfähigen Klebstoff zur Kontaktierung der Elektrode umfasst, dann kann die elektrische Verbindung einfach herstellbar und zuverlässig sein. Der leitfähige Klebstoff kann zumindest teilweise in der Aussparung des Piezoelement angeordnet sein. Der leitfähige Klebstoff kann den Verbindungsabschnitt der Elektrode und insbesondere die Metallisierung der Wand der Aussparung des Piezoelements kontaktieren. Der leitfähige Klebstoff kann alternativ oder zusätzlich den auf der der Membran abgewandten Seite des Piezoelements verlaufenden Bereich des Verbindungsabschnitts kontaktieren. Der leitfähige Klebstoff kann, gegebenenfalls zusammen mit einem Verbindungsabschnitt der Elektrode, die Aussparung vollständig oder teilweise ausfüllen.

Bevorzugt verbindet der leitfähige Klebstoff Bestandteile der elektrischen Verbindung, etwa den Verbindungsabschnitt der Elektrode und z. B. eine elektrische Leitung, insbesondere einen Flexleiter, miteinander, insbesondere elektrisch und/oder mechanisch.

Für die den Piezoaktor mit der Membran wirkverbindende Klebeverbindung und für den leitfähigen Klebstoff der elektrischen Verbindung kann derselbe Klebstoff verwendet sein. Es ist denkbar, dass gleichzeitig mit dem Herstellen der Klebeverbindung das Füllen der Aussparung bzw. das Kontaktieren der Elektrode in einem Arbeitsschritt unter Verwendung genau eines leitfähigen Klebstoffs erzielbar ist.

Bevorzugt sind der Klebstoff der Klebeverbindung und der leitfähige Klebstoff unterschiedliche Klebstoffe. Vorzugsweise umfasst die Klebeverbindung einen auf maximale Festigkeit bei geringer Dicke hin optimierten Klebstoff. Der leitfähige Klebstoff der elektrischen Verbindung kann weicher bzw. zäher sein als der Klebstoff der den Piezoaktor mit der Membran wirkverbindenden Klebeverbindung. Es hat sich gezeigt, dass die Fertigung des Sensors erleichtert sein kann, wenn zunächst die den Piezoaktor mit der Membran wirkverbindende Klebeverbindung herstellbar ist und nach deren Aushärten der leitfähige Klebstoff aufbringbar bzw. die Elektrode kontaktierbar ist.

Zur Anpassung der thermischen Ausdehnungskoeffizienten von Membran und Piezoelement ist zwischen der Membran und dem Piezoaktor bevorzugt ein Ausgleichselement, bspw. eine Ausgleichskeramik, angeordnet. Durch ein solches, typischerweise scheibenförmig ausgebildetes Ausgleichselement können thermische Ausdehnungen der Membran aufgenommen und aufgrund thermischer Spannungen hervorgerufene elektrische Spannungen damit weitgehend vermieden werden. Insbesondere können durch ein solches Ausgleichselement mechanische Spannungen, die zu einem Versagen bzw. Brechen des Piezoaktors führen können, vermieden oder reduziert werden.

Die Auswirkung von Unterschieden der thermischen Ausdehnung zwischen Piezoelement und Membran können abgemildert sein. Das Ausgleichselement ist bevorzugt elektrisch nicht-leitend. Die Klebeverbindung ist bevorzugt zwischen dem Piezoaktor und dem Ausgleichselement angeordnet. Das Ausgleichselement ist bevorzugt mit der Membran verklebt.

An der der Membran abgewandten Seite des Piezoelements ist bevorzugt eine weitere Elektrode angeordnet. Bevorzugt umfasst der Sensor eine weitere elektrische Verbindung, vorzugsweise zwischen der weiteren Elektrode und der Elektronik. Bevorzugt ist mit Hilfe der Elektronik eine Potentialdifferenz zwischen der Elektrode und der weiteren Elektrode bewirkbar bzw. abgreifbar. Bevorzugt ist mit Hilfe der Elektronik, der Elektrode und der weiteren Elektrode eine Potentialdifferenz an gegenüberliegenden Seiten bzw. Flächen des Piezoelements anlegbar bzw. abgreifbar.

Die Fläche, in der sich die Elektrode und die weitere Elektrode, beabstandet durch das Piezoelement, überdecken, kann als aktive Fläche des Piezoelements bezeichnet werden. Bevorzugt ist die aktive Fläche des Piezoelements größer als 7/10 oder 8/10 oder 9/10 der Grundfläche des Piezoelements. Bevorzugt ist die aktive Fläche rotationssymmetrisch. Die aktive Fläche kann der Fläche der weiteren Elektrode entsprechen. Die bevorzugte Rotationssymmetrie der aktiven Fläche kann die Unempfindlichkeit des Piezoaktors gegen Verdrehung bewirken oder hierzu beitragen.

Die weitere Elektrode ist bevorzugt ringförmig, insbesondere in Form eines Kreisrings ausgebildet. Die weitere Elektrode ist bevorzugt um die Aussparung herum angeordnet. Die weitere Elektrode kann sich zumindest nahezu auf der gesamten der Membran abgewandten Seite des Piezoelements erstrecken, vorzugsweise mit Ausnahme eines um die Aussparung herum angeordneten inneren Kreisrings, zur Schaffung eines Isolationsabstands zur Isolierung der weiteren Elektrode von der Elektrode. Bevorzugt ist die weitere Elektrode um dieselbe Rotationsachse rotationssymmetrisch, wie die Elektrode. Vorzugsweise weist der Piezoaktor genau zwei Elektroden auf. Daher umfasst der Sensor bevorzugt auch nur zwei elektrische Verbindungsbereiche bzw. Kontakte zu Elektroden des Piezoaktors. Die Verbindungsbereiche können eine Löt-, Klebe- und/oder Schweißverbindung umfassen.

In einer vorteilhaften Ausgestaltung umfasst der Sensor Positioniermittel zur Positionierung des Piezoaktors und/oder des Ausgleichselements relativ zur Membran. Auf diese Weise kann die Ausrichtung des Piezoaktors hinsichtlich seiner Position vor dem Verkleben, insbesondere vor dem Herstellen der Klebeverbindung, vereinfacht sein. Die Positioniermittel können mit der Aussparung des Piezoelements zusammenwirken. Zwar können die Positionierungsmittel so ausgebildet sein, dass sie auch die Ausrichtung des Piezoaktors hinsichtlich seiner Rotationslage vorgeben. Bevorzugt bewirken die Positionierungsmittel jedoch lediglich die Vorgabe der Position und nicht der Rotationslage des Piezoaktors in dem Sensor bzw. Sensorgehäuse. Aufgrund der Unempfindlichkeit des Piezoaktors gegen Verdrehen, kann auf eine Vorgabe der Rotationslage verzichtet sein.

Die Positioniermittel können einen - insbesondere zylindrischen - Stempel des Ausgleichselements auf der dem Piezoaktor zugewandten Seite des Ausgleichselements umfassen. Der Stempel kann in der Aussparung des Piezoelements angeordnet sein. Der Stempel kann als Zentrierung des Piezoaktors relativ zu dem Ausgleichselement fungieren. Der zylindrische Stempel kann eine Durchmesser aufweisen, der dem Durchmesser der Aussparung des piezoelektrischen Elements entspricht. Die Höhe des Stempels kann der Höhe des Piezoelements entsprechen. Insbesondere in dieser Ausführungsform weist der Verbindungsabschnitt der Elektrode bevorzugt einen auf der der Membran abgewandten Seite des Piezoelements verlaufenden Bereich auf, zur Kontaktierung der Elektrodenfläche von der der Membran abgewandten Seite des Piezoelements.

Eine besonders zuverlässige Positionierung des Piezoaktors und des Ausgleichselements relativ zur Membran kann erreicht sein, wenn die Positioniermittel zwei beidseitig angeordnete Zentrierzapfen an dem Ausgleichselement umfassen. Diese können in die Aussparung des Piezoelements bzw. in eine korrespondierende Ausnehmung der Membran eingreifen.

In einer Ausführungsform können die Positioniermittel einen Membranzentrierzapfen umfassen. Das Ausgleichselement kann eine Ausnehmung umfassen, die fluchtend zu der Aussparung des Piezoelements verlaufen kann und der Zentrierzapfen kann durch die Ausnehmung und in die Aussparung reichen. Hierdurch kann sowohl der Piezoaktor als auch das Ausgleichselement relativ zu der Membran zentriert sein. Der Zentrierzapfen kann einstückig mit der Membran ausgebildet, etwa durch einen Drehprozess an der Membranoberfläche geformt sein. Alternativ ist der Zentrierzapfen nicht einstückig, sondern als separates Bauteil zu der Membran ausgebildet. Der Zentrierzapfen kann ein elektrisch nicht leitfähiges Material umfassen und mit der Membran z. B. durch Kleben oder Einpressen verbunden sein.

Die Positioniermittel können eine zum dem Umriss des Ausgleichselements korrespondierende Membranvertiefung zur Aufnahme des Ausgleichselements umfassen.

In einer weiteren Ausführungsform kann die elektrische Verbindung als Innenleiter einer koaxialen Verbindung ausgebildet sein. Bspw. kann die elektrische Verbindung als Innenleiter eines Koaxialkabels realisiert werden, wobei der Innenleiter wenigstens teilweise in die Aussparung ragt. Der Innenleiter des Koaxialkabels kann dafür für eine Länge, die in etwa der Dicke des Piezoelements entspricht, abgesetzt sein und in die Öffnung des Piezoelements eingeführt werden. Dort kann der Innenleiter mittels eines elektrisch leitfähigen Klebstoffs elektrisch leitend mit der Elektrode verbunden und gleichzeitig mechanisch fixiert sein. Die Klebung und elektrische Kontaktierung kann am Umfang des Innenleiters dem Verbindungsabschnitt erfolgen, kann aber auch wenigstens teilweise über eine stirnseitige Verklebung erfolgen.

Der Innenleiter durchdringt die Aussparung vorzugsweise wenigstens zur Hälfte, weiter bevorzugt zu wenigstens 80%, besonders bevorzugt annähernd vollständig. Je größer die Überlappung zwischen dem Innenleiter und der Aussparung ist, desto größer ist die Fläche, die elektrisch und/oder mechanisch kontaktiert werden kann.

Dadurch kann eine besonders gute elektrische und/oder mechanische stabile Verbindung erreicht werden.

Bevorzugt ist ein Durchmesser des Innenleiters so an einen Durchmesser der Aussparung angepasst, dass ein definierter Abstand zwischen dem Innenleiter und der Innenwandung der Aussparung verbleibt, der durch den elektrisch leitfähigen Klebstoff überbrückt wird. Eine exakte Anpassung kann bspw. durch ein Kalibrierwerkzeug erreicht werden, mit dem der Durchmesser des Inneneiters beim oder nach dem Absetzen so bearbeitet wird, dass dieser optimal in die Aussparung passt.

Die weitere Elektrode kann durch eine Außenleiter der koaxialen Verbindung kontaktiert sein. Auch der Außenleiter kann elektrisch leitend mit der weiteren Elektrode verklebt sein, vorzugsweise stirnseitig.

Auf diese Weise kann besonders einfach und ohne zusätzliche Komponenten eine elektrische und mechanische Verbindung zwischen dem Piezoelement und der elektrischen Zuleitung erreicht werden.

An der Membran können, als mechanischer Schwinger, zwei Schwinggabeln angeordnet sein.

Weitere praktische Vorteile und Ausführungsbeispiele sind nachfolgend in Verbindung mit den Figuren beschrieben. Es zeigen:
- Fig. 1: schematisch: eine Querschnittsdarstellung eines Teils eines aus dem Stand der Technik bekannten Vibrationssensors,
- Fig. 2: eine Querschnittsdarstellung eines Teils eines ersten Ausführungsbeispiels eines Vibrationssensors,
- Fig. 3: die Elektrode des in Fig. 2 gezeigten Vibrationssensors,
- Fig. 4: eine perspektivische Darstellung des Piezoaktors aus Fig. 2, mit Blick auf die der Membran abgewandte Seite,
- Fig. 5: eine Darstellung wie in Fig. 4, jedoch mit Blick auf die der Membran zugewandte Seite,
- Fig. 6: eine Querschnittsdarstellung eines Teils eines weiteren Ausführungsbeispiels eines Vibrationssensors,
- Fig. 7: eine genauere Darstellung eines Teils des Vibrationssensors aus Fig. 6,
- Fig. 8: die Elektrode aus Fig. 7,
- Fig. 9: eine perspektivische Darstellung des Piezoaktors aus Fig. 7, mit Blick auf die der Membran abgewandte Seite,
- Fig. 10: eine perspektivische Darstellung des Piezoaktors aus Fig. 7, mit Blick auf die der Membran zugewandte Seite,
- Fig. 10a: eine Querschnittsdarstellung eines Teils eines weiteren Ausführungsbeispiels eines Vibrationssensors,
- Fig. 11 bis 14: Querschnittsdarstellungen von Teilen weiterer Ausführungsbeispielen eines Vibrationssensors.
- Fig. 15: Eine Ausschnittsvergrößerung eines Schnitts in Längsrichtung der Aussparung in einem weiteren Ausführungsbeispiel.

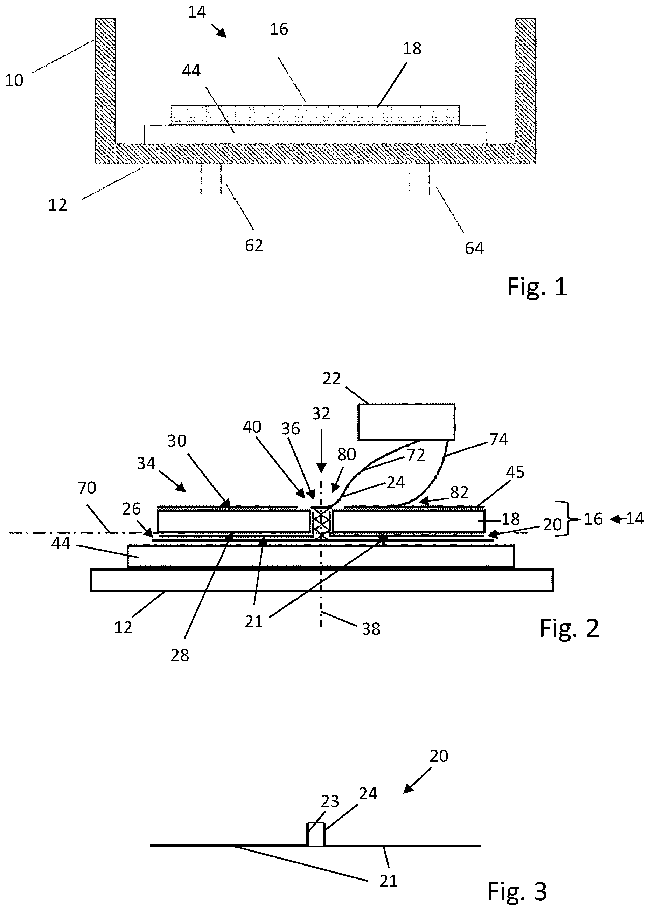

In Fig. 1 ist ein Teil eines aus dem Stand der Technik bekannten Vibrationssensors skizzenhaft gezeigt.

Ein Piezoaktor 16 mit ringscheibenförmigem Piezoelement 18 ist hierbei auf ein isolierendes Ausgleichselement 44 aus keramischem Material geklebt. Der Aufbau von Piezoaktor 16 und Ausgleichselement 44 ist ebenfalls durch eine Klebeverbindung auf einer Membran 12 fixiert. Die Membran 12 geht in ein Gehäuse 10 über oder ist hieran befestigt. Durch Anlegen eines elektrischen Potentials an das Piezoelement 18 kann die Membran 12 bei einem solchen Aufbau in Schwingung versetzt werden. Auf der äußeren Seite der Membran 12 können sich weitere mechanisch schwingfähige Elemente, wie beispielsweise Gabelzinken 62, 64 einer Schwinggabel befinden, die in Fig. 1 durch gestrichelte Linien lediglich angedeutet sind. Die der Membran zugewandte Seite des Piezoaktors ist nicht frei zugänglich und kann somit nicht direkt kontaktiert werden.

Der in Fig. 2 teilweise gezeigte Vibrationssensor dient zur Detektion von Füllständen, Grenzständen oder zur Überwachung von Prozessparametern und umfasst eine in Schwingung versetzbare Membran 12. Die Membran 12, das Gehäuse 10 und die Gabelzinken 62, 64 können wie in Fig. 1 gezeigt ausgebildet sein. Der Vibrationssensor umfasst eine als Piezoaktor 16 ausgebildete Antriebseinheit 14. Der Piezoaktor weist ein Piezoelement 18, und eine mit dem Piezoelement 18 verbundenen Elektrode 20 auf. Die Elektrode weist eine Elektrodenfläche 21 auf. Zudem umfasst der Vibrationssensor eine Klebeverbindung 26, mit deren Hilfe der Piezoaktor 16 so mit der Membran 12 wirkverbunden ist, dass Schwingungen des Piezoaktors 16 auf die Membran 12 übertragbar sind und umgekehrt. Zudem umfasst der Vibrationssensor eine Elektronik 22 und eine elektrische Verbindung 24 zwischen der Elektronik 22 und der Elektrodenfläche 21.

Das Piezoelement 18 weist eine Aussparung 32 auf und die elektrische Verbindung 24 verläuft durch die Aussparung 32.

Das Piezoelement 18 weist eine erste, der Membran 12 zugewandte Seite 28 auf. Die Elektrodenfläche 21 ist ausschließlich auf dieser ersten Seite 28 angeordnet. Das Piezoelement 18 weist eine zweite, der Membran 12 abgewandte Seite 30 auf. Die Aussparung 32 reicht von der ersten Seite 28 bis zur zweiten Seite 30 durch das Zentrum des Piezoelements 18 hindurch.

Der Piezoaktor 16 ist als verklebte Ringscheibe 34 ausgebildet, mit zentrischer Umkontaktierung 36. Das Piezoelement 18 und die Elektrode 20 sind jeweils um eine Rotationsachse 38 rotationssymmetrisch.

Die Elektrode 20 weist zusätzlich zu der ebenen Elektrodenfläche 21 einen in die Aussparung 32 reichenden Verbindungsabschnitt 23 auf und die elektrische Verbindung 24 umfasst diesen Verbindungsabschnitt 23.

Die elektrische Verbindung 24 umfasst zudem einen in der Aussparung 32 angeordneten, kreuzschraffiert dargestellten leitfähigen Klebstoff 40. Genauer gesagt umfasst die elektrische Verbindung 24 eine Kontaktierung der elektrischen Leitung 72 mit dem Verbindungsabschnitt 23 und diese Kontaktierung umfasst den leitfähigen Klebstoff 40.

Der leitfähige Klebstoff 40 füllt die Aussparung 32 bei dem in Fig. 2 gezeigten Ausführungsbeispiel vollständig aus und verbindet den Verbindungsabschnitt 23 der Elektrode 20 und die elektrische Leitung 72 elektrisch und mechanisch miteinander. Hierzu ist zunächst die Klebeverbindung 26 herstellbar und nach deren Aushärten der leitfähige Klebstoff 40 aufbringbar und aushärtbar.

Wie Fig. 2 ebenfalls zeigt, umfasst der Sensor ein Ausgleichselement 44 zwischen der Membran 12 und dem Piezoaktor 16 in Form einer Ausgleichskeramik und die Klebeverbindung 26 ist zwischen dem Piezoaktor 16 und dem Ausgleichselement 44 angeordnet. Das Ausgleichselement 44 ist seinerseits mit der Membran 12 verklebt, was in Fig. 2 nicht explizit dargestellt ist.

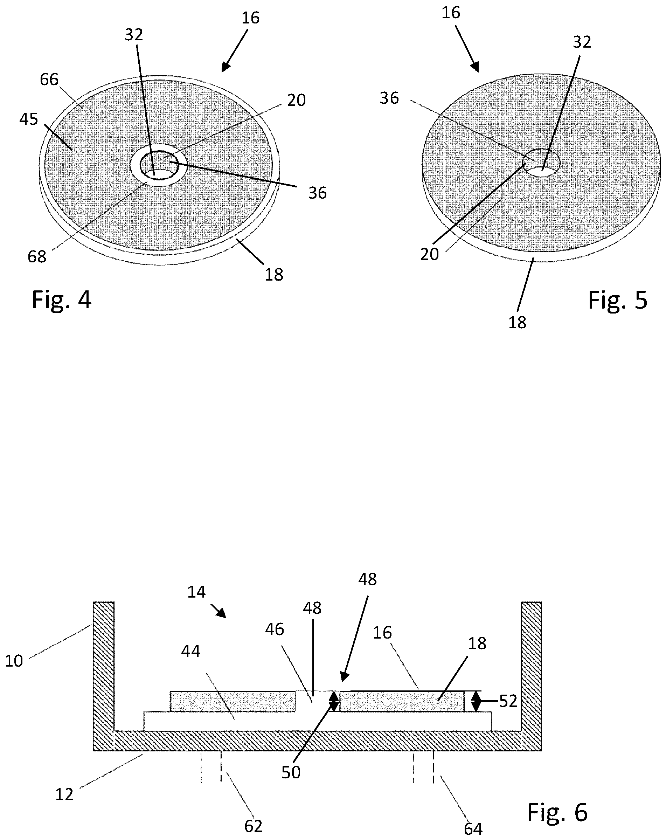

Wie Fig. 2 und z. B. Fig. 4 zeigen, ist an der der Membran 12 abgewandten Seite 30 des Piezoelements 18 eine weitere Elektrode 45 angeordnet und der Sensor umfasst eine weitere elektrische Verbindung 74 zwischen der weiteren Elektrode 45 und der Elektronik 22. Die weitere Elektrode 45 hat die Form eines Kreisrings 66, ist um die Aussparung 32 herum angeordnet und erstreckt sich zumindest nahezu auf der gesamten der Membran 12 abgewandten Seite des Piezoelements 18 mit Ausnahme eines um die Aussparung 32 herum angeordneten inneren Kreisrings 68, zur Isolation der weiteren Elektrode 45 von der Elektrode 20.

Wie Fig. 2 auch zeigt, erstreckt sich das Piezoelement 18 in einer Ebene 70 und weist eine in dieser Ebene 70 liegende Grundfläche auf. Die aktive Fläche des Piezoelements ist größer als 7/10 oder 8/10 oder 9/10 der Grundfläche des Piezoelements. Zudem ist zu erkennen, dass der Sensor nur zwei elektrische Verbindungsbereiche 80, 82 zu den Elektroden 20, 45 des Piezoaktors 16 aufweist.

Fig. 3 verdeutlicht die Form der Elektrode 20 des in Fig. 2 gezeigten Ausführungsbeispiels, mit der ebenen, kreisringförmigen Elektrodenfläche 21 und dem Verbindungsabschnitt 23. Wie Fig. 2 und Fig. 3 zeigen, erstreckt sich die Elektrode 20 über zueinander geneigte Flächen und hat in dem in diesen Figuren gezeigten Ausführungsbeispiel die Form einer Kreisfläche mit Loch und an den Rändern des Lochs angrenzendem Hohlzylinder.

Die Figuren 4 und 5 verdeutlichen den Aufbau des Piezoaktors 16 mit kreisringförmigem Piezoelement 18, wie oben beschriebener Elektrode 20 und weiterer, kreisringförmiger Elektrode 45.

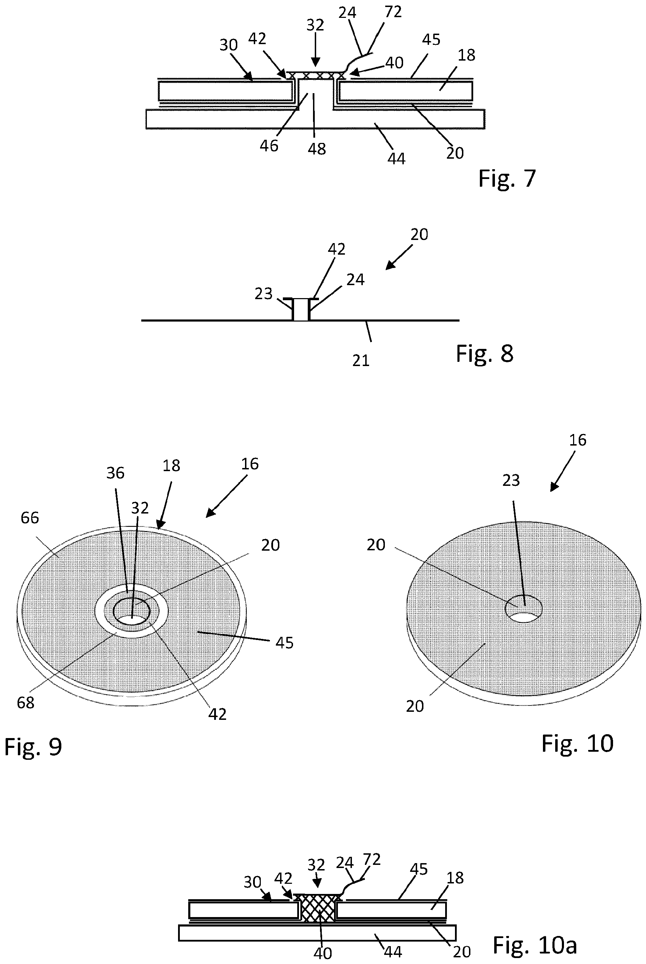

Die Fig. 6 bis 10 zeigen ein weiteres Ausführungsbeispiel. Wie am besten aus Fig. 7 zu erkennen, ist bei diesem Ausführungsbeispiel die Aussparung 32 des Piezoelements nicht vollständig mit leitfähigem Klebstoff gefüllt, sondern in dieser Aussparung ist ein Positioniermittel 46 angeordnet. Zur Kontaktierung der Elektrodenfläche 21 umfasst der Verbindungsabschnitt 23 zusätzlich einen auf der der Membran abgewandten Seite 30 des Piezoelements verlaufenden Bereich 42. Dieser Bereich 42 ist, wie etwa Fig. 8 und 9 zeigen, kreisringförmig und kragenförmig, sowie um die Aussparung 32 des Piezoelements 18 herum angeordnet.

Wie erneut Fig. 7 zeigt, umfasst die elektrische Verbindung 24 eine Kontaktierung der elektrischen Leitung 72 mit diesem Bereich 42 mittels leitfähigem Klebstoffs 40.

Die Fig. 9 und 10 verdeutlichen den Aufbau des Piezoantriebs 16 mit kreisringförmigem Piezoelement 18, wie oben beschriebener Elektrode 20 mit den Bereich 42 umfassenden Verbindungsabschnitt 23 und weiterer, kreisringförmiger Elektrode 45.

Fig. 10a zeigt eine Variante, bei der Verbindungsabschnitt 23 der Elektrode, wie bei dem in den Fig. 6 bis 10 gezeigten Ausführungsbeispiel, zusätzlich einen auf der der Membran abgewandten Seite 30 des Piezoelements verlaufenden Bereich 42 aufweist, jedoch kein Positionierungsmittel 46 vorhanden ist. Wie bei dem in Fig. 2 gezeigten Ausführungsbeispiel füllt der leitfähige Klebstoff 40 die Aussparung 32 des Piezoelements vollständig aus.

Die Figuren 6 und 11 bis 12 zeigen verschiedene Ausgestaltungen von Positioniermitteln 46 zur Positionierung des Piezoaktors 16 und des Ausgleichselements 44 relativ zur Membran 12.

Fig. 6 zeigt als Positioniermittel 46 einen zylindrischen Stempel 48 des Ausgleichselements 44 auf der dem Piezoaktor 16 zugewandten Seite des Ausgleichselements 44, der in der Aussparung 32 des Piezoelements angeordnet ist. Die Höhe 50 des Stempels entspricht der Höhe 52 des Piezoelements.

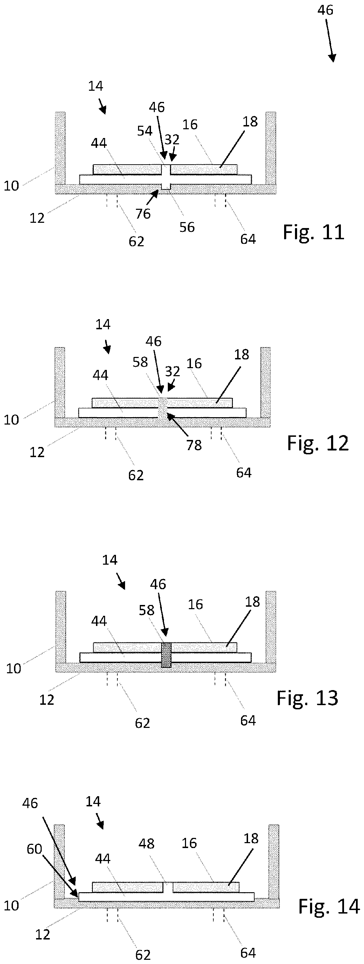

Fig. 11 zeigt als Positioniermittel 46 zwei beidseitig angeordnete Zentrierzapfen 54, 56 an dem Ausgleichselement 44, die in die Aussparung 32 des Piezoelements bzw. in eine korrespondierende Ausnehmung 76 der Membran eingreifen.

Fig. 12 zeigt als Positioniermittel 46 einen einstückig mit der Membran gebildeten Membranzentrierzapfen 58, der durch eine Ausnehmung 78 des Ausgleichselements und in die Aussparung 32 des Piezoelements greift.

Fig. 13 zeigt als Positioniermittel 46 einen Membranzentrierzapfen 58, der ein elektrisch nicht leitfähiges Material umfasst und mit der Membran 12 durch Kleben verbunden ist.

Fig. 14 zeigt als Positioniermittel 46 zusätzlich zu dem zylindrischen Stempel 48 eine Membranvertiefung 60, zur Aufnahme des Ausgleichselements 44.

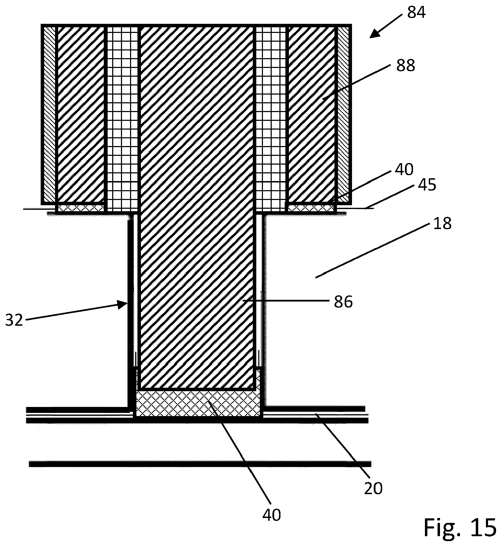

Figur 15 zeigt in einer Ausschnittsvergrößerung einen Schnitt in Längsrichtung der Aussparung 32 durch ein weiteres Ausführungsbeispiel eines Vibrationssensors mit einem Piezoaktor 16, wie er in den Figuren 4 und 5 gezeigt ist.

Die elektrische Kontaktierung des Piezoelements 18 erfolgt in diesem Ausführungsbeispiel einerseits durch einen Innenleiter 86 einer Koaxialleitung 84, der in der Aussparung 32 des Piezoelements angeordnet und mit dem leitfähigen Klebstoff 40 mit diesem sowohl elektrisch als auch mechanisch verbunden ist. Die weitere Elektrode 45 ist mit dem Außenleiter 88 der Koaxialleitung 84 verbunden, der ebenfalls mittels eines leitfähigen Klebstoffes 40 mechanisch und elektrisch leitend mit dieser verbunden ist.

Dadurch, dass das Piezoelement 18 aufgrund der lediglich zentralen Kontaktierung vollkommen rotationssymmetrisch ausgestaltet werden kann, treten weniger Spannungen aufgrund der Verformungen des Piezos auf, wodurch sich unter anderem die mechanische Belastbarkeit und Haltbarkeit des Piezoelements 18 deutlich verlängert. Ferner verringert sich dadurch, dass eine radial weiter außen liegende Kontaktierungsstelle wegfällt, zusätzlich die Steifigkeit wodurch eine größere Amplitude generiert werden kann.

### Bezugszeichenliste

- 10: Gehäuse
- 12: Membran
- 14: Antriebseinheit
- 16: Piezoaktor
- 18: Piezoelement
- 20: Elektrode
- 21: Elektrodenfläche
- 22: Elektronik
- 23: Verbindungsabschnitt der Elektrode
- 24: elektrische Verbindung
- 26: Klebeverbindung
- 28: der Membran zugewandte Seite des Piezoelements
- 30: der Membran abgewandte Seite des Piezoelements
- 32: Aussparung des Piezoelements
- 34: verklebte Ringscheibe
- 36: zentrische Umkontaktierung
- 38: Rotationsachse
- 40: leitfähiger Klebstoff
- 42: auf der der Membran abgewandte Seite des Piezoelements verlaufender Bereich des Verbindungsabschnitts
- 44: Ausgleichselement
- 45: weitere Elektrode
- 46: Positioniermittel
- 48: zylindrischer Stempel des Ausgleichselements
- 50: Höhe des zylindrischen Stempels
- 52: Höhe des Piezoelements
- 54: Zentrierzapfen des Ausgleichselements
- 56: Zentrierzapfen des Ausgleichselements
- 58: Membranzentrierzapfen
- 60: Membranvertiefung
- 62: Gabelzinke
- 64: Gabelzinke
- 66: Kreisring
- 68: innerer Kreisring
- 70: Ebene
- 72: elektrische Leitung
- 74: weitere elektrische Verbindung
- 76: Ausnehmung der Membran
- 78: Ausnehmung des Ausgleichselements
- 80: elektrischer Verbindungsbereich
- 82: elektrischer Verbindungsbereich
- 84: Koaxialleitung
- 86: Innenleiter
- 88: Außenleiter

## Patentansprüche

1. Vibrationssensor, zur Detektion von Füllständen, Grenzständen oder zur Überwachung von Prozessparametern, umfassend:
- eine in Schwingung versetzbare Membran (12),
- eine Antriebseinheit (14), wobei die Antriebseinheit (14) einen Piezoaktor (16) umfasst, der ein Piezoelement (18), und eine mit dem Piezoelement (18) verbundene Elektrode (20) mit einer Elektrodenfläche (21) aufweist,
- eine Klebeverbindung (26), mit deren Hilfe der Piezoaktor (16) so mit der Membran (12) wirkverbunden ist, dass Schwingungen des Piezoaktors (16) auf die Membran (12) übertragbar sind,
- eine Elektronik (22),
- eine elektrische Verbindung (24) zwischen der Elektronik (22) und der Elektrodenfläche (21),
wobei das Piezoelement (18) eine Aussparung (32) aufweist und die elektrische Verbindung (24) durch die Aussparung (32) verläuft.

2. Vibrationssensor nach Anspruch 1,
**dadurch gekennzeichnet, dass**
das Piezoelement (18) eine erste, der Membran (12) zugewandte Seite (28) und eine zweite, der Membran (12) abgewandte Seite (30) aufweist, und die Elektrodenfläche (21) auf der ersten Seite (28) angeordnet ist.

3. Vibrationssensor nach Anspruch 1 oder 2,
**dadurch gekennzeichnet, dass**
die Aussparung (32) durch das Zentrum des Piezoelements (18) verläuft.

4. Vibrationssensor nach einem der Ansprüche 1 bis 3,
**dadurch gekennzeichnet, dass**
der Piezoaktor (16) rotationssymmetrisch ist.

5. Vibrationssensor nach einem der Ansprüche 1 bis 4,
**dadurch gekennzeichnet, dass**
der Piezoaktor (16) als in dem Sensor verklebte Ringscheibe (34) ausgebildet ist, mit zentrischer Umkontaktierung (36).

6. Vibrationssensor nach einem der Ansprüche 1 bis 5,
**dadurch gekennzeichnet, dass**
die elektrische Verbindung (24) einen in die Aussparung (32) reichenden Verbindungsabschnitt (23) der Elektrode (20) umfasst.

7. Vibrationssensor nach Anspruch 6,
**dadurch gekennzeichnet, dass**
der Verbindungsabschnitt (23) einen auf der der Membran abgewandten Seite (30) des Piezoelements verlaufenden Bereich (42) aufweist.

8. Vibrationssensor nach einem der Ansprüche 1 bis 7,
**dadurch gekennzeichnet, dass**
die elektrische Verbindung (24) einen in der Aussparung (32) angeordneten leitfähigen Klebstoff (40) umfasst.

9. Vibrationssensor nach einem der Ansprüche 1 bis 8,
**dadurch gekennzeichnet, dass**
der Sensor ein Ausgleichselement (44) zwischen der Membran (12) und dem Piezoaktor (16) aufweist und die Klebeverbindung (26) zwischen dem Piezoaktor (16) und dem Ausgleichselement (44) angeordnet ist.

10. Vibrationssensor nach einem der Ansprüche 1 bis 9,
**dadurch gekennzeichnet, dass**
an der der Membran abgewandten Seite (30) des Piezoelements eine weitere Elektrode (45) angeordnet ist.

11. Vibrationssensor nach einem der Ansprüche 1 bis 10,
**dadurch gekennzeichnet, dass**
der Sensor Positioniermittel (46) umfasst, zur Positionierung des Piezoaktors (16) und/oder des Ausgleichselements (44) relativ zur Membran (12).

12. Vibrationssensor nach Anspruch 11,
**dadurch gekennzeichnet, dass**
die Positioniermittel (46) einen zylindrischen Stempel (48) des Ausgleichselements (44) auf der dem Piezoaktor (16) zugewandten Seite des Ausgleichselements (44) umfassen.

13. Vibrationssensor nach Anspruch 11 oder 12,
**dadurch gekennzeichnet, dass**
die Positioniermittel (46) zwei beidseitig angeordnete Zentrierzapfen (54, 56) an dem Ausgleichselement (44) umfassen.

14. Vibrationssensor nach einem der Ansprüche 11 bis 13,
**dadurch gekennzeichnet, dass**
die Positioniermittel (46) einen Membranzentrierzapfen (58) umfassen.

15. Vibrationssensor nach einem der Ansprüche 11 bis 14,
**dadurch gekennzeichnet, dass**
die Positioniermittel (46) eine Membranvertiefung (60) zur Aufnahme des Ausgleichselements (44) umfassen.

16. Vibrationssensor nach einem der vorhergehenden Ansprüche,
**dadurch gekennzeichnet, dass**
die elektrische Verbindung (24) als Innenleiter (86) einer koaxialen Verbindung ausgebildet ist, vorzugsweise als Innenleiter (86) eines Koaxialkabels, wobei der Innenleiter (86) wenigstens teilweise in die Aussparung (32) ragt, vorzugsweise dies wenigstens zur Hälfte, weiter bevorzugt zu wenigstens 80%, besonders bevorzugt annähernd vollständig durchdringt und dort elektrisch mit der Elektrodenfläche (21) verbunden ist.
